# EUROPEAN PATENT APPLICATION

(11) **EP 4 484 212 A2**
(43) Date of publication of application: **01.01.2025**
(21) Application number: 24184778.9
(22) Date of filing: 26.06.2024
(51) Int. Cl.: B60L 53/30, B60L 53/31, H02G 3/10, H05K 5/00, H05K 7/14

(54) **CHARGING STATION STRUCTURE**

(30) Priority: 28.06.2023 CN 202310776858
(71) Applicant: Xiamen Guangpu Intelligent Charging Technology Co., Ltd., Xiamen City 361000 (CN)
(72) Inventor: LIN, Guobiao, Xiamen, 361101 (CN); WU, Junyi, Xiamen, 361101 (CN); LIN, Guanjian, Xiamen, 361101 (CN); CHEN, Haihui, Xiamen, 361101 (CN)
(74) Representative: Verscht, Thomas Kurt Albert

(57) **Abstract**

The present disclosure discloses a charging station structure comprising a charging station body and a mounting frame, the mounting frame is configured to be fixed to a fixed building; a rear side surface of the charging station body comprises an accommodating cavity having an open type; a terminal connector is disposed in the accommodating cavity; a wire compartment is fixedly disposed on the mounting frame, and a socket is disposed in the wire compartment; the socket is connected to the terminal connector for power energization by plugging, and the wire compartment is disposed in the accommodating cavity; a commercial power wiring hole is disposed on the mounting frame and below the wire compartment, and a terminal used for connecting to commercial power in the wire compartment is connected to an external side by the commercial power wiring hole; the charging station body is fixedly connected to the mounting frame using a plugging and unplugging structure with upper and lower bodies, a plugging and unplugging connection of the terminal connector and the socket is controlled by a plugging and unplugging connection method of the charging station body and the mounting frame, and the terminal connector is connected to the socket for the power energization using alternating current by plugging; an operation of the user for opening the cover is avoided, and an installation efficiency is improved.

## Description

### FIELD OF THE DISCLOSURE

The present disclosure relates to the technical field of charging stations, and in particular relates to a charging station structure.

### BACKGROUND OF THE DISCLOSURE

An installation of the charging stations in public places is required to meet charging needs of new energy vehicles with development of the new energy vehicles. In the traditional charging station structures, when the charging station is installed and wired, an operation of opening a cover needs to be performed.

In the traditional charging station structures, one comprises inner and outer covers. During wiring, the outer cover is firstly opened, the inner cover is then opened, a wire compartment for wiring is exposed, one comprises a rear cover, and screws are also needed to be removed so as to open the cover for wiring. Not only are wiring steps cumbersome and complex, original waterproof performance of the product may be also destroyed if the cover is not properly installed after being opened due to sealing using a sealing ring adopted for waterproofing of the traditional charging stations. That is, in a process of detachment and installation, the screws may be not properly locked, resulting in waterproof failure caused by insufficient sealing distance.

### BRIEF SUMMARY OF THE DISCLOSURE

In view of the aforementioned practical problems and the deficiencies of the existing techniques, the main technical problem to be solved by the present disclosure is to provide a charging station structure, which avoids an operation of the user opening a cover and improves installation efficiency.

In order to solve the aforementioned technical problem, the present disclosure provides a charging station structure, and the following technical solution is adapted:
A charging station structure, it comprises a charging station body and a mounting frame, the mounting frame is configured to be fixed to a fixed building; a rear side surface of the charging station body comprises an accommodating cavity having an open type; a terminal connector is disposed in the accommodating cavity;
A wire compartment is fixedly disposed on the mounting frame, and a socket is disposed in the wire compartment; the socket is connected to the terminal connector for power energization by plugging, and the wire compartment is disposed in the accommodating cavity;
A commercial power wiring hole is disposed on the mounting frame and below the wire compartment, and a terminal used for connecting to commercial power in the wire compartment is connected to an external side by the commercial power wiring hole;
The charging station body is fixedly connected to the mounting frame using a plugging and unplugging structure with upper and lower bodies, a plugging and unplugging connection of the terminal connector and the socket is controlled by a plugging and unplugging connection method of the charging station body and the mounting frame, and the terminal connector is connected to the socket for the power energization using alternating current by plugging.

In a preferred embodiment, the plugging and unplugging structure with the upper and lower bodies comprises one or more T-shaped fixing pins disposed on the mounting frame and one or more slots disposed on the charging station body; an end of the one or more slots comprises a U-shaped hole along an installing direction;

The one or more fixing pins are configured to move up and down in the one or more slots, after the one or more fixing pins are pushed into the one or more slots, the charging station body is pressed to be pushed downward in a vertical direction so as to drive the one or more slots to move until the U-shaped hole is clamped to the one or more fixing pins to form a fixed connection, otherwise the clamping connection and the fixing is released.

In a preferred embodiment, the one or more slots are disposed along one or more edges of an end surface of the accommodating cavity; two sides of the accommodating cavity respectively comprise two of the one or more slots, and one of the one or more slots corresponds to one of the one or more T-shaped fixing pins.

In a preferred embodiment, an anti-detaching member is disposed below the mounting frame, and the anti-detaching member is locked to a bottom of the charging station body.

In a preferred embodiment, two sides of the terminal connector comprise positioning pins, two sides of the socket correspondingly comprise positioning holes to cooperate with the positioning pins by plugging;

The positioning pins extend along a plugging direction and have a given height difference from the terminal connector.

In a preferred embodiment, a plugging arrangement of the terminal connector and the socket is male and female connectors having opposite plug terminals;

One of the terminal connector and the socket is a male connector, and another one is a female connector.

In a preferred embodiment, a wire storage slot is disposed in the accommodating cavity at a position corresponding to a commercial power wiring alignment.

In a preferred embodiment, a given gap disposed between the mounting frame and the wire compartment forms a water introduction channel.

In a preferred embodiment, the wire compartment comprises a rear cover, and an upper end of the rear cover comprises a step having a given slope to form a flow introduction structure.

In a preferred embodiment, after the charging station body is clamped to the mounting frame, a low end of the slope of the step is aligned with an end surface of the accommodating cavity.

Therefore, the present disclosure has the following advantages.
1. The present disclosure provides a charging station structure, which reduces a design of the rear cover of the charging station based on the traditional design, the design includes an open-type accommodating cavity, the user avoids opening the cover due to the design, and an installation efficiency is improved; a wire compartment is correspondingly disposed on the mounting frame, a wiring plug and a corresponding terminal connector are connected by plugs of opposite types so as to achieve a connection between the body and an input wire, and s wiring structure is simplified.
2. The present disclosure provides a charging station structure, a terminal for connecting commercial power wiring moves outwardly from an inner side of a body of the wire compartment to an outer side of the body so as to realize the connection between the charging station body and the commercial power, which can be directly connected to a socket of the terminal without opening a cover of the charging station body.
3. The present disclosure provides a charging station structure, the flow introduction structure is disposed on the rear cover of the wire compartment, water flows downward due to gravitational force instead of entering into a shell in a reverse direction, the traditional sealing structure using a sealing ring is not used, so as to avoid a problem of waterproofing failure caused by possible insufficient sealing distance due to screws not being locked in place in detachment and installation processes.
4. The present disclosure provides a charging station structure, a plugging and unplugging connection of the terminal connector and the socket is controlled by a plugging and unplugging connection method of the charging station body and the mounting frame, male and female connectors having opposite plug terminals are used, and a convenience of current connection and a plugging and unplugging installation of the upper and lower bodies is resolved using an application of the male and female connectors having the opposite plug terminals in an alternating current charging station.

### BRIEF DESCRIPTION OF THE DRAWINGS

FIG. 1 is a diagrammatic view of an assembly of a charging station body and a mounting frame of Embodiment.
FIG. 2 is a structural diagrammatic view of the charging station body of Embodiment;
FIG. 3 is a structural diagrammatic view of the mounting frame of Embodiment;
FIG. 4 is a diagrammatic view of a plugging connection between a terminal connector and a socket of Embodiment;
FIG. 5 is an in-use view of the charging station structure of Embodiment;
FIG. 6 is a side sectional view of the charging station structure of Embodiment;
FIG. 7 is a partially enlarged view of a waterproof structure of Embodiment;
FIG. 8 is a diagrammatic view of a flow introduction structure of a rear cover of Embodiment.

Character illustration in the accompanying drawings: charging station body 1; accommodating cavity 11; wire storage slot 111; terminal connector 12; positioning pin 121; slot 13; U-shaped hole 14; mounting frame 2; wire compartment 21; positioning holes 211; rear cover 212; flow introduction structure 213; socket 22; commercial power wire hole 23; fixing pin 24; anti-detaching member 25.

### DETAILED DESCRIPTION OF THE EMBODIMENTS

The technical solutions in the embodiments of the present disclosure will be clearly and completely described in combination with the accompanying drawings in the embodiments of the present disclosure; it is obvious that the described embodiments are some embodiments of the present disclosure instead of all embodiments, all other embodiments fall within the protection scope of the present disclosure provided that they are obtained by a technical person of ordinary skill in the art based on the embodiments of the present disclosure without creative works.

In the description of the present disclosure, it should be noted that the terms, such as "upper", "lower", "inner", "outer", "top/bottom", indicate orientations or positional relationships based on orientations and positional relationships shown in the drawings, so as to easily describe the present disclosure and simplify the description, rather than indicating or implying that the referenced or implied device or element should have a specific orientation or be constructed and operated in a specific orientation and therefore should not be understood as a limitation of the present disclosure. Further, the terms "first" and "second" are merely used for description and should not be understood as indicating or implying relative importance.

In the description of the present disclosure, unless otherwise specified and limited, it should be noted that the terms, such as "installed", "disposed", "sleeved/socketed", and "connected", should develop broad understanding, for example, "connected" can be a wall mountable connection, a detachable connection, or an integrated connection, a mechanical connection, an electrical connection, a direct connection, an indirect connection through an intermediator, or communication between inner portions of two members, for a technical person of ordinary skill in the art, the specific meaning of the terms in the present disclosure can be understood under specific conditions.

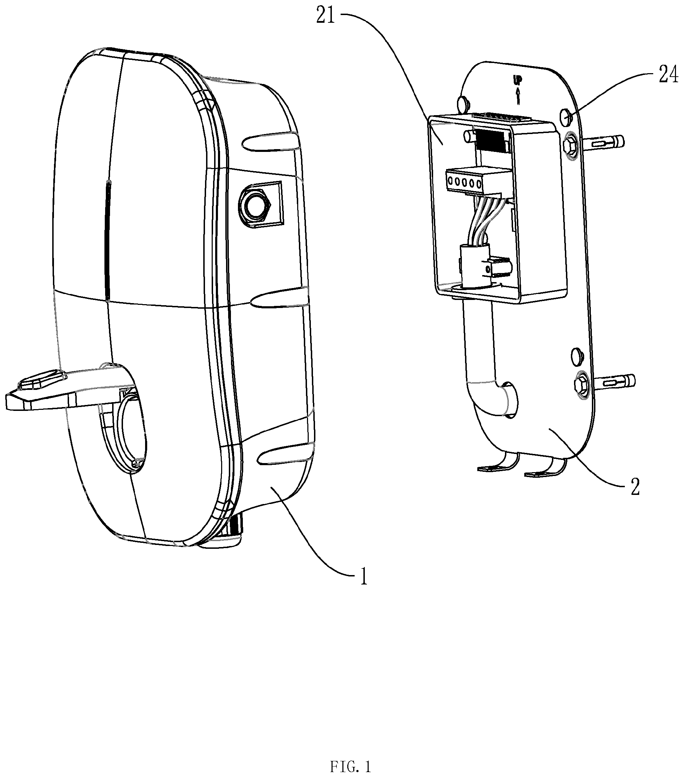

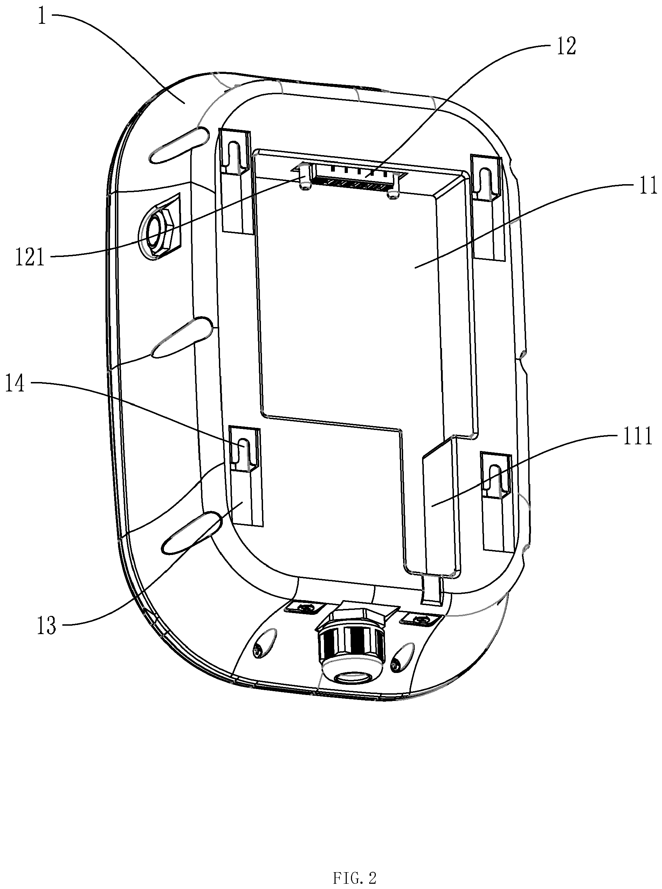

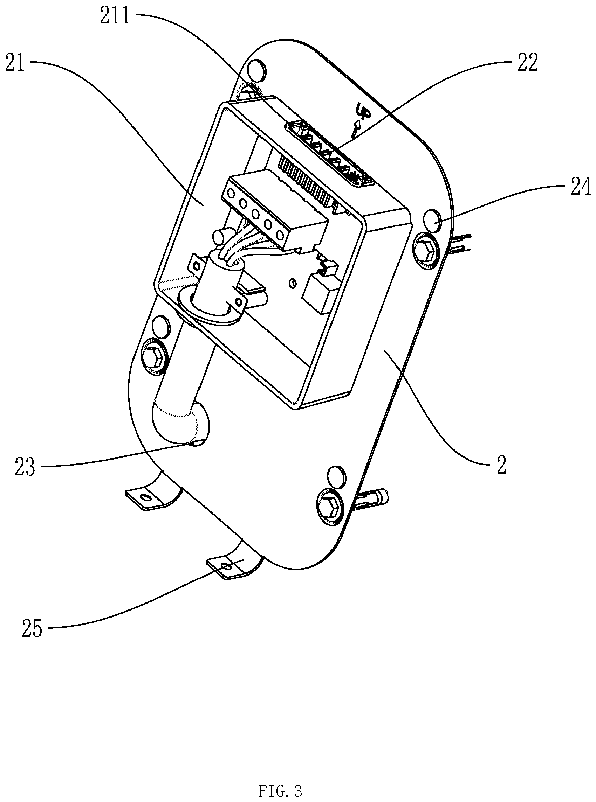

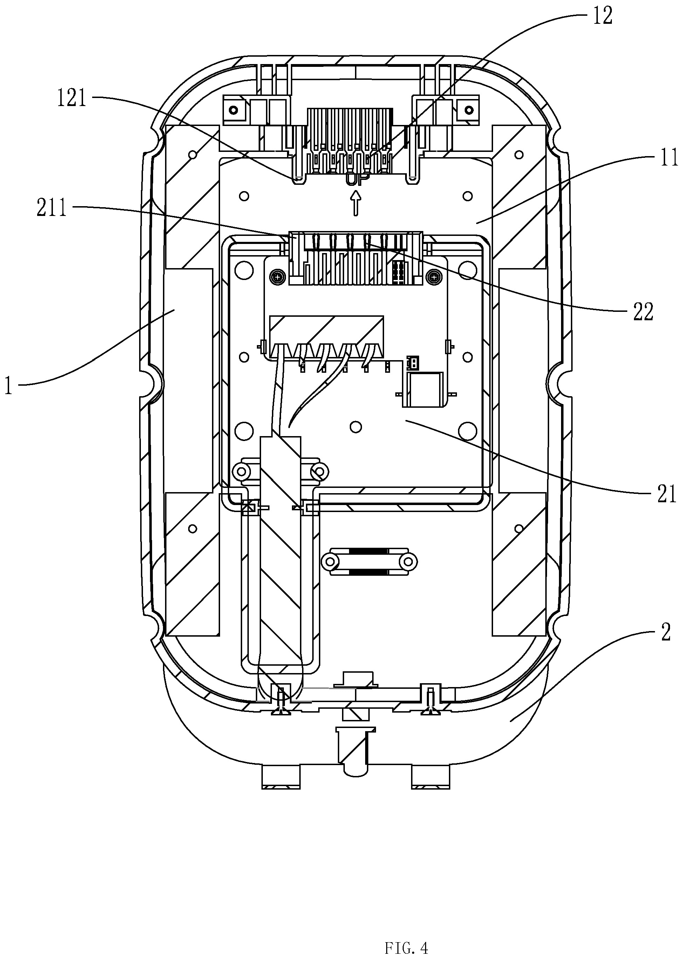

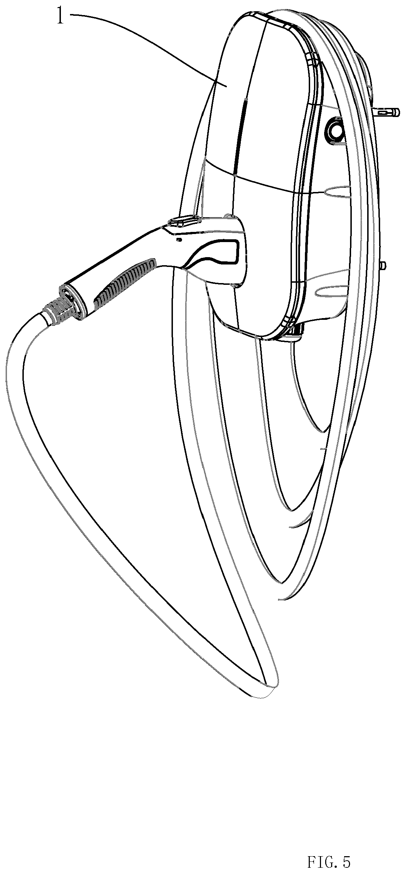

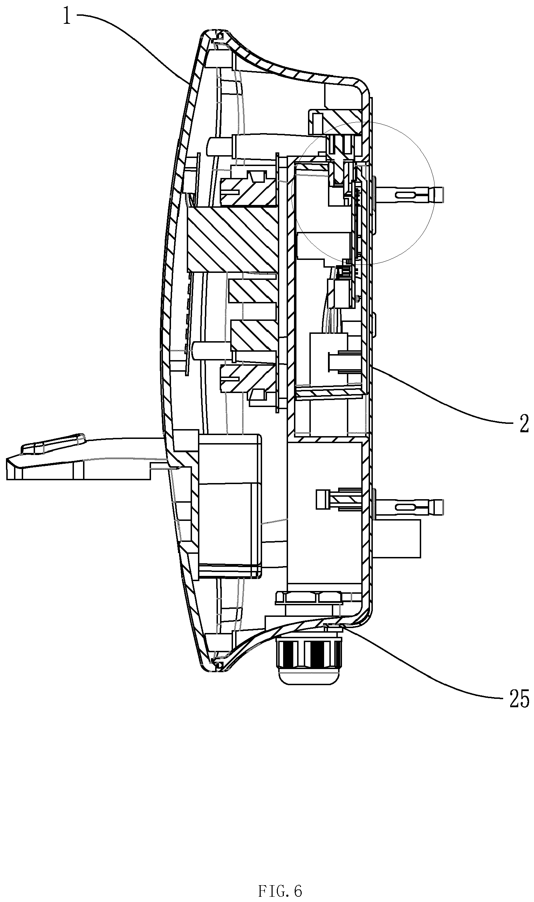

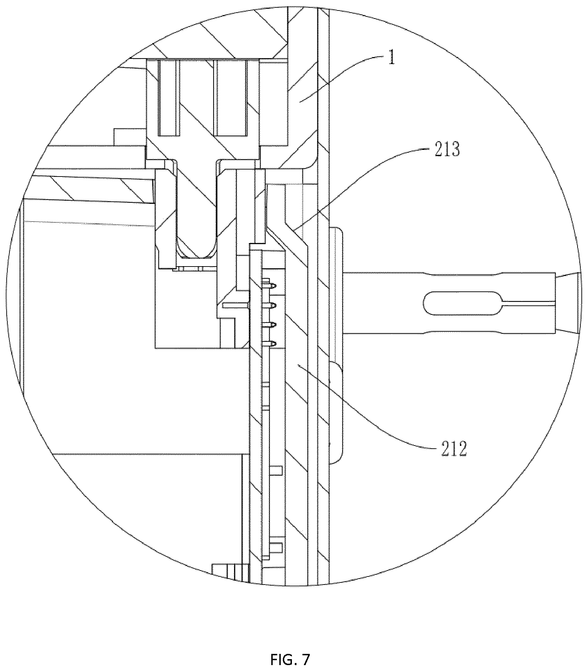

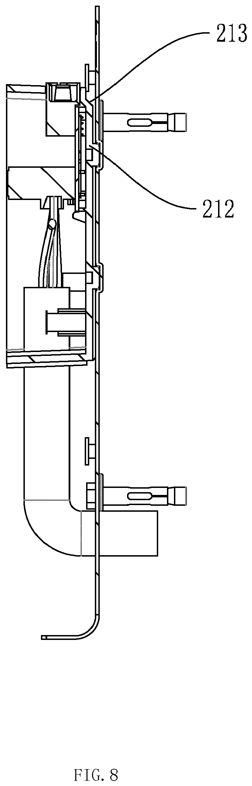

The present disclosure will be further described below in conjunction with FIGS. 1-8.

An embodiment of the present disclosure discloses a charging station structure, and the charging station structure comprises a charging station body 1 and a mounting frame 2, the mounting frame 2 is used to fix to a fixed building; a rear side surface of the charging station body 1 comprises an accommodating cavity 11 having an open style; a terminal connector 12 is disposed in the accommodating cavity 11; a wire compartment 21 is fixedly disposed on the mounting frame 2, and a socket 22 is disposed in the wire compartment 21; the terminal connector 12 is connected to the socket 22 by plugging to achieve power energization, and the wire compartment 21 is disposed in the accommodating cavity 11; the charging station body 1 is fixedly connected to the mounting frame 2 by a clamping structure, and in a clamping state, the terminal connector 12 is maintained to be connected to the socket 22 by plugging simultaneously. That is, when the charging station body 1 and the mounting frame 2 are in a process of clamping together, a plugging process of the socket 22 and the terminal connector 12 is performed by clamping together, when the clamping structure is clamped in place, the socket 22 is properly connected to the terminal connector 12 simultaneously to achieve the power energization by plugging.

The charging station structure of the present disclosure does not require opening the cover for wiring and uses the accommodating cavity 11 disposed behind the charging station body and the wire compartment 21 disposed on the mounting frame 2 as a supporting installation, a connection is achieved through plugs of opposite types of the socket 22 and the terminal connector 12, the mounting frame 2, as a whole, can achieve opening and closing of the accommodating cavity 11 of the charging station body, at the same time, the connection of the body and input wires can be realized simultaneously by installing the mounting frame 2 and the accommodating cavity 11, the user can avoid opening the cover due to this design, and the opening of the cover and the wiring are integrated to form a one-step installation, thus improving installation efficiency.

In this embodiment, the charging station body is fixedly connected to the mounting frame by a plugging and unplugging structure with upper and lower bodies, at the same time, a plugging arrangement of a wiring terminal and the socket is male and female connectors having opposite plug terminals, so as to perform a wire connection of a charging station using plugging members having a plugging and unplugging style, which simplifies wiring steps, further, in this embodiment, a plugging and unplugging connection of the terminal connector and the socket is controlled by a plugging and unplugging connection method of the charging station body and the mounting frame, and a connection and a fixation of the mounting frame and a circuit are completed simultaneously through the one-step installation.

Further, in this embodiment, the terminal connector is connected to the socket for power energization using alternating current by plugging, and a convenience of a current connection and a plugging and unplugging installation of the upper and lower bodies is resolved using an application of the male and female connectors in an alternating current charging station.

In this embodiment, the mounting frame 2 comprises a commercial power wiring hole 23 below the wire compartment, and a terminal used for connecting to commercial power in the wire compartment 21 is connected to an external side by the commercial power wiring hole 23; further, a connection structure of the charging station and the commercial power is optimized, a terminal for wiring commercial power moves outwardly from an inner side of the wire compartment 21 to an outer side of the wire compartment 21 so as to realize the connection between the charging station and the commercial power, which can be directly connected to a socket of the terminal through the commercial power wiring hole 23, that is, the commercial power wiring is complete without opening a cover of the charging station body 1.

A wire storage slot 111 is disposed in the accommodating cavity at a position corresponding to a commercial power wiring alignment, the wire storage slot 111 is designed to extend inward, so that an input wire is not visible from an appearance after the installation is complete.

In this embodiment, the plugging and unplugging structure with the upper and lower bodies comprises T-shaped fixing pins 24 disposed on the mounting frame 2 and slots 13 disposed on the charging station body 1; the slots 13 comprise a U-shaped hole 14 along an installing direction at an end thereof; the fixing pins 24 can move up and down in the slots 13, after the fixing pins 24 have been pushed into the slots 13, the charging station body 1 is pressed to be pushed downward in a vertical direction so as to drive the slots 13 to move until the U-shaped holes 14 are clamped to the fixing pins 24 to form a fixed connection, otherwise the clamping connection and the fixing is released.

Further, the slots 13 are disposed along an edge of an end face of the accommodating cavity 11; two sides of the accommodating cavity 11 respectively comprise two of the slots 13, and one of the slots 13 corresponds to one of the T-shaped fixing pins 24. An arrow defining an installation direction is disposed on the mounting frame 2 and above the wire compartment 21.

Installation steps of the charging station body 1 and the mounting frame 2 are as follows: in a direction marked by the arrow, the T-shaped fixing pins 24 are firstly aligned with and pushed into the corresponding slots 13, and the charging station body 1 is then pressed down, so that the T-shaped fixing pins 24 are clamped in the U-shaped holes 14, at this time, the terminal connector 12 is connected to the socket 22.

In this embodiment, an anti-detaching member 25 is disposed below the mounting frame 2, the anti-detaching member 25 is locked to a bottom of the charging station body 1, the anti-detaching member 25 comprises a lug structure at the bottom of the mounting frame 2 and a screw, the lug structure is locked to the charging station body 1 by the screw, an anti-detaching screw is designed to further lock the charging station body 1 to the mounting frame 2, thus preventing the charging station body 1 from being removed by someone at random.

In order to better implement the technical solution of this embodiment, in this embodiment, positioning pins 121 are disposed on two sides of the terminal connector 12, and positioning holes 211 are correspondingly disposed on two sides of the socket 22 to cooperate with the positioning pins 121 by plugging. Therein, the positioning pins 121 extend in a plugging direction and have a given height difference from the terminal connector 12. When the fixing pins 24 cooperate with the U-shaped holes 14, the positioning pins 121 firstly cooperate with the positioning holes 211 to enable the socket 22 to be aligned with an installation position of the terminal connector 12 to ensure that the socket 22 is matched with and connected to the terminal connector 12.

In this embodiment, a given gap disposed between the mounting frame 2 and the wire compartment 21 forms a water introduction channel. After the charging station body 1 is assembled to the mounting frame 2, an end surface of the mounting frame 2 abuts an end surface of the accommodating cavity 11, water flowing in from an external side through the assembly gap is exported through the water introduction channel, further, the wire compartment 21 comprises a rear cover 212, and an upper end of the rear cover 212 comprises a step having a given slope to form a flow introduction structure 213. After the charging station body 1 is clamped to the mounting frame 2, a low end of the slope of the step is aligned with an end surface of the accommodating cavity 11, and the rear cover 212 adopts the step with the slope for flow introduction, so that the water flows downward due to gravitational force instead of entering into a shell in a reverse direction, thus achieving waterproofing effects.

The invention may be summarized as follows: The present disclosure discloses a charging station structure comprising a charging station body and a mounting frame, the mounting frame is configured to be fixed to a fixed building; a rear side surface of the charging station body comprises an accommodating cavity having an open type; a terminal connector is disposed in the accommodating cavity; a wire compartment is fixedly disposed on the mounting frame, and a socket is disposed in the wire compartment; the socket is connected to the terminal connector for power energization by plugging, and the wire compartment is disposed in the accommodating cavity; a commercial power wiring hole is disposed on the mounting frame and below the wire compartment, and a terminal used for connecting to commercial power in the wire compartment is connected to an external side by the commercial power wiring hole; the charging station body is fixedly connected to the mounting frame using a plugging and unplugging structure with upper and lower bodies, a plugging and unplugging connection of the terminal connector and the socket is controlled by a plugging and unplugging connection method of the charging station body and the mounting frame, and the terminal connector is connected to the socket for the power energization using alternating current by plugging; an operation of the user for opening the cover is avoided, and an installation efficiency is improved.

The aforementioned are merely preferred embodiments of the present disclosure, and the scope of the disclosure is not limited thereto, thus: it is intended that the protective scope of the present disclosure cover equivalent variations provided they are made based on the structure, the shape, and the principle of the present disclosure.

## Claims

1. A charging station structure, **characterized in that**: it comprises a charging station body and a mounting frame, the mounting frame is configured to be fixed to a fixed building; a rear side surface of the charging station body comprises an accommodating cavity having an open type; a terminal connector is disposed in the accommodating cavity;
a wire compartment is fixedly disposed on the mounting frame, and a socket is disposed in the wire compartment; the socket is connected to the terminal connector for power energization by plugging, and the wire compartment is disposed in the accommodating cavity;
a commercial power wiring hole is disposed on the mounting frame and below the wire compartment, and a terminal used for connecting to commercial power in the wire compartment is connected to an external side by the commercial power wiring hole;
the charging station body is fixedly connected to the mounting frame using a plugging and unplugging structure with upper and lower bodies, a plugging and unplugging connection of the terminal connector and the socket is controlled by a plugging and unplugging connection method of the charging station body and the mounting frame, and the terminal connector is connected to the socket for the power energization using alternating current by plugging.

2. The charging station structure according to claim 1, **characterized in that**: the plugging and unplugging structure with the upper and lower bodies comprises one or more T-shaped fixing pins disposed on the mounting frame and one or more slots disposed on the charging station body; an end of the one or more slots comprises a U-shaped hole along an installing direction;
the one or more fixing pins are configured to move up and down in the one or more slots, after the one or more fixing pins are pushed into the one or more slots, the charging station body is pressed to be pushed downward in a vertical direction so as to drive the one or more slots to move until the U-shaped hole is clamped to the one or more fixing pins to form a fixed connection, otherwise the clamping connection and the fixing is released.

3. The charging station structure according to claim 2, **characterized in that**: the one or more slots are disposed along one or more edges of an end surface of the accommodating cavity; two sides of the accommodating cavity respectively comprise two of the one or more slots, and one of the one or more slots corresponds to one of the one or more T-shaped fixing pins.

4. The charging station structure according to any one or more of claims 1 to 3, **characterized in that**: an anti-detaching member is disposed below the mounting frame, and the anti-detaching member is locked to a bottom of the charging station body.

5. The charging station structure according to any one or more of claims 1 to 4, **characterized in that**: two sides of the terminal connector comprise positioning pins, two sides of the socket correspondingly comprise positioning holes to cooperate with the positioning pins by plugging;
the positioning pins extend along a plugging direction and have a given height difference from the terminal connector.

6. The charging station structure according to any one or more of claims 1 to 5, **characterized in that**: a plugging arrangement of the terminal connector and the socket is male and female connectors having opposite plug terminals;
one of the terminal connector and the socket is a male connector, and another one is a female connector.

7. The charging station structure according to any one or more of claims 1 to 6, **characterized in that**: a wire storage slot is disposed in the accommodating cavity at a position corresponding to a commercial power wiring alignment.

8. The charging station structure according to any one or more of claims 1 to 7, **characterized in that**: a given gap disposed between the mounting frame and the wire compartment forms a water introduction channel.

9. The charging station structure according to any one or more of claims 1 to 8, **characterized in that**: the wire compartment comprises a rear cover, and an upper end of the rear cover comprises a step having a given slope to form a flow introduction structure.

10. The charging station structure according to claim 9, **characterized in that**: after the charging station body is clamped to the mounting frame, a low end of the slope of the step is aligned with an end surface of the accommodating cavity.
